# EUROPÄISCHE PATENTSCHRIFT

(11) **EP 1 664 154 B1**
(45) Veröffentlichungstag und Bekanntmachung des Hinweises auf die Patenterteilung: **27.05.2009**
(21) Anmeldenummer: 04764825.8
(22) Anmeldetag: 04.09.2004
(51) Int. Cl.: C08G 64/02, C08G 64/14

(54) **HOCHFUNKTIONELLE, HOCH- ODER HYPERVERZWEIGTE POLYCARBONATE SOWIE DEREN HERSTELLUNG UND VERWENDUNG**
HIGHLY FUNCTIONAL, HIGHLY BRANCHED OR HYPERBRANCHED POLYCARBONATES AND THE PRODUCTION AND USE HEREOF
POLYCARBONATES HAUTEMENT OU HYPER RAMIFIES HAUTEMENT FONCTIONNELS, LEUR PRODUCTION ET LEUR UTILISATION

(30) Priorität: 12.09.2003 DE 10342523
(43) Veröffentlichungstag der Anmeldung: 07.06.2006
(73) Patentinhaber: BASF SE, 67056 Ludwigshafen (DE)
(72) Erfinder: BRUCHMANN, Bernd, 67251 Freinsheim (DE); STUMBE, Jean-Francois, F-67200 Strasbourg (FR); BÉDAT, Joelle, F-67850 Offendorf (FR)
(86) Internationale Anmeldenummer: PCT/EP2004/009874
(87) Internationale Veröffentlichungsnummer: WO 2005/026234

(56) Entgegenhaltungen:
- DE-A- 3 418 092
- FR-A- 2 010 777
- US-A- 4 533 729
- BOLTON D H ET AL: "SYNTHESIS AND CHARACTERIZATION OF HYPERBRANCHED POLYCARBONATES" MACROMOLECULES, AMERICAN CHEMICAL SOCIETY. EASTON, US, Bd. 30, Nr. 7, 7. April 1997 (1997-04-07), Seiten 1890-1896, XP000684813 ISSN: 0024-9297 in der Anmeldung erwähnt

## Beschreibung

Die vorliegende Erfindung betrifft hochfunktionelle hoch- oder hyperverzweigte Polycarbonate auf Basis von Dialkyl- oder Diarylcarbonaten oder Phosgen, Diphosgen oder Triphosgen und aliphatischen aliphatisch/aromatischen und aromatischen Di- oder Polyolen, ein Verfahren zu ihrer Herstellung sowie ihre Verwendung zur Herstellung von Druckfarben.

Die erfindungsgemäßen hochfunktionellen hoch- oder hyperverzweigten Polycarbonate können u.a. als Haftvermittler, Thixotropiermittel oder als Bausteine zur Herstellung von Polyadditions- oder Polykondensationspolymeren, zum Beispiel von Lacken, Überzügen, Klebstoffen, Dichtmassen, Giesselastomeren oder Schaumstoffen technisch vorteilhaft eingesetzt werden.

Polycarbonate werden üblicherweise aus der Reaktion von Alkoholen oder Phenolen mit Phosgen oder aus der Umesterung von Alkoholen oder Phenolen mit Dialkyl- oder Diarylcarbonaten erhalten. Technisch bedeutend sind aromatische Polycarbonate, die zum Beispiel aus Bisphenolen hergestellt werden, aliphatische Polycarbonate spielen vom Marktvolumen her gesehen bisher eine untergeordnete Rolle. Siehe dazu auch Becker/Braun, Kunststoff-Handbuch Bd. 3/1, Polycarbonate, Polyacetale, Polyester, Celluloseester, Carl-Hanser-Verlag, München 1992, Seiten 118-119, und "Ullmann's Encyclopedia of Industrial Chemistry", 6th Edition, 2000 Electronic Release, Verlag Wiley-VCH.

Die in der Literatur beschriebenen aromatischen oder aliphatischen Polycarbonate sind in der Regel linear oder aber mit einem geringen Verzweigungsgrad aufgebaut.

So beschreibt die US 3,305,605 die Verwendung fester linearer aliphatischer Polycarbonate mit einer Molmasse oberhalb 15000 Da als Weichmacher für Polyvinylpolymere.

Die US 4,255,301 beschreibt lineare cycloaliphatische Polycarbonate als Lichtstabilisatoren für Polyester.

Lineare aliphatische Polycarbonate werden weiterhin bevorzugt zur Herstellung thermoplastischer Kunststoffe, zum Beispiel für Polyester oder für Polyurethan- oder Polyhamstoffurethan-Elastomere, verwendet, siehe dazu auch EP 364052, EP 292772, EP 1018504 oder DE 10130882. Kennzeichnend für diese linearen Polycarbonate ist allgemein deren hohe Eigenviskosität.

EP-A 896 013 offenbart vernetzte Polycarbonate, welche durch Umsetzung von Gemischen aus Diolen und Polyolen mit mindestens 3 OH-Gruppen mit organischen Carbonaten, Phosgenen oder Derivaten davon erhältlich sind. Bevorzugt werden mindestens 40 % des Diols eingesetzt. Die Schrift enthält keinerlei Hinweise darauf, wie man ausgehend von den genannten Ausgangsprodukten auch unvernetzte, hyperverzweigte Polycarbonate herstellen könnte.

Definiert aufgebaute, hochfunktionelle Polycarbonate sind erst seit kurzer Zeit bekannt.

S. P. Rannard und N. J. Davis, J. Am. Chem. Soc. 2000, 122, 11729, beschreiben die Herstellung von perfekt verzweigten dendrimeren Polycarbonaten durch Reaktion von Carbonylbisimidazol als Phosgen-analoger Verbindung mit Bis-hydroxyethylamino-2-propanol. Synthesen zu perfekten Dendrimeren sind vielstufig, daher kostenintensiv und für die Übertragung in einen industriellen Maßstab eher ungeeignet.

D.H. Bolton und K. L. Wooley, Macromolecules 1997, 30, 1890, beschreiben die Herstellung von hochmolekularen, sehr starren hyperverzweigten aromatischen Polycarbonaten durch Umsetzung von 1,1,1-Tris(4'-hydroxyphenyl)ethan mit Carbonylbisimidazol.

Hyperverzweigte Polycarbonate lassen sich auch gemäß WO 98/50453 herstellen. Nach dem dort beschriebenen Verfahren werden Triole wiederum mit Carbonylbisimidazol umgesetzt. Es entstehen zunächst Imidazolide, die dann intermolekular zu den Polycarbonaten weiterreagieren. Nach der genannten Methode fallen die Polycarbonate als farblose oder blassgelbe gummiartige Produkte an.

Die genannten Synthesen zu hoch- oder hyperverzweigten Polycarbonaten weisen folgende Nachteile auf:
a) die hyperverzweigten Produkte sind entweder hochschmelzend oder aber gummiartig, dadurch wird eine spätere Verarbeitbarkeit deutlich eingeschränkt.
b) während der Reaktion freiwerdendes Imidazol muß aufwändig aus dem Reaktionsgemisch entfernt werden.
c) die Reaktionsprodukte enthalten immer terminale Imidazolid-Gruppen. Diese Gruppen sind labil und müssen über einen Folgeschritt z.B. in Hydroxylgruppen umgewandelt werden.
d) Carbonyldiimidazol ist eine vergleichsweise teure Chemikalie, die die Einsatzstoffkosten stark erhöht.

Der Erfindung lag daher die Aufgabe zugrunde, mittels eines technisch einfachen und preiswerten Verfahrens aromatische, bevorzugt aromatisch/aliphatische und besonders bevorzugt aliphatische, hochfunktionelle und hochverzweigte Polycarbonate bereitzustellen, deren Strukturen sich leicht an die Erfordernisse der Anwendung anpassen lassen und die aufgrund ihres definierten Aufbaus vorteilhafte Eigenschaften, wie hohe Funktionalität, hohe Reaktivität, geringe Viskosität und gute Löslichkeit, in sich vereinen können, sowie ein Verfahren zur Herstellung dieser hochfunktionellen hoch- oder hyperverzweigten Polycarbonate.

Die Aufgabe konnte erfindungsgemäß gelöst werden, indem Dialkyl- oder Diarylcarbonate mit di- oder mehrfunktionellen aliphatischen oder aromatischen Alkoholen umgesetzt wurden.

In einer alternativen Ausführungsform der Erfindung werden Phosgen, Diphosgen oder Triphosgen anstelle der Carbonate als Ausgangsmaterial eingesetzt.

Gegenstand der Erfindung ist somit ein Verfahren zur Herstellung von hochfunktionellen, hoch- oderhyperverzweigten Polycarbonaten gemäß Anspruch 1.

Gegenstand der Erfindung sind weiterhin die nach diesem Verfahren hergestellten hochfunktionellen, hoch- oder hyperverzweigten Polycarbonate.

Unter hyperverzweigten Polycarbonaten werden im Rahmen dieser Erfindung unvernetzte Makromoleküle mit Hydroxyl- und Carbonat- oder Carbamoylchloridgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt. Unter "dendrimer" wird im Zusammenhang mit der vorliegenden Erfindung verstanden, daß der Verzweigungsgrad 99,9 100% beträgt. Zur Definition des "Degree of Branching" siehe H. Frey et al., Acta Polym. 1997, 48, 30.

Gegenstand der Erfindung ist ferner die Verwendung der erfindungsgemäßen hochfunktionellen hochverzweigten Polycarbonate als Haftvermittler, Thixotropiermittel oder als Bausteine zur Herstellung von Polyadditions- oder Polykondensationspolymeren, zum Beispiel von Lacken, Überzügen, Klebstoffen, Dichtmassen, Giesselastomeren oder Schaumstoffen.

Zu der Erfindung ist um Einzelnen das Folgende auszuführen:

Als Ausgangsmaterial kann Phosgen, Diphosgen oder Triphosgen eingesetzt werden, vorzugsweise werden jedoch organische Carbonate (A) verwendet.

Bei den Resten R der als Ausgangsmaterial eingesetzten organischen Carbonate (A) der allgemeinen Formel RO[(CO)O]ₙR handelt es sich jeweils unabhängig voneinander um einen geradkettigen oder verzweigten aliphatischen, aromatisch/aliphatischen oder aromatischen Kohlenwasserstoffrest mit 1 bis 20 C-Atomen handelt. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

Bei den Carbonaten kann es sich bevorzugt um einfache Carbonate der allgemeinen Formel RO(CO)OR handeln, d.h. in diesem Falle steht n für 1.

Generell handelt es sich bei n um eine ganze Zahl zwischen 1 und 5, bevorzugt zwischen 1 und 3.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOₓ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat oder Didodecylcarbonat.

Beispiele für Carbonate, bei denen n größer als 1 ist, umfassen Dialkyleicarbonate, wie Di(tert.butyl)dicarbonat oder Dialkyltricarbonate wie Di(tert.butyl)tricarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Diisobutylcarbonat oder Diphenylcarbonat als aromatisches Carbonat.

Die organischen Carbonate werden mit mindestens einem aliphatischen oder aromatischen Alkohol (B), welcher mindestens 3 OH-Gruppen aufweist oder Gemischen zweier oder mehrerer verschiedener Alkohole umgesetzt.

Beispiele für Verbindungen mit mindestens drei OH-Gruppen umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin, Polyglycerine, Bis(tri-methylolpropan), Tris(hydroxymethyl)isocyanurat, Tris(hydroxyethyl)isocyanurat, Phloroglucinol, Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, Zucker, wie zum Beispiel Glucose, Zuckerderivate, tri- oder höherfunktionelle Polyetherole auf Basis tri- oder höherfunktioneller Alkohole und Ethylenoxid, Propylenoxid oder Butylenoxid oder deren Gemischen, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (B') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2-und 1,3-Propandiol, Dipropylenglykol, Tripropylenglykol, Neopentylglykol,1,2-, 1,3- und 1,4-Butandiol, 1,2-, 1,3- und 1,5-Pentandiol, Hexandiol, Cyclopentandiol, Cyclohexandiol, Cyclohexandimethanol, Bis(4-Hydroxycyclohexyl)methan, Bis(4-Hydroxycyclohexyl)ethan, 2,2- Bis(4-Hydroxycyclohexyl)propan, 1,1'-Bis(4-Hydroxyphenyl)-3,3-5-trimethylcyclohexan, Resorcin, Hydrochinon, 4,4'-Dihydroxydiphenyl, Bis-(4-Hydroxyphenyl)sulfid, Bis(4-Hydroxyphenyl)sulfon, Bis(hydroxymethyl)benzol, Bis(Hydroxymethyl)toluol, Bis(p-hydroxyphenyl)methan, Bis(p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran, Polycaprolacton oder Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen (B') zu den mindestens trifunktionellen Alkoholen (B) vom Fachmann je nach den gewünschten Eigenschaften des Polycarbonates festgelegt. Im Regelfalle beträgt die Menge des oder der Alkohole (B') 0 bis 39,9 mol % bezüglich der Gesamtmenge aller Alkohole (B) und (B') zusammen. Bevorzugt beträgt die Menge 0 bis 35 mol %, besonders bevorzugt 0 bis 25 mol % und ganz besonders bevorzugt 0 bis 10 mol %.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum erfindungsgemäßen hochfunktionellen hochverzweigten Polycarbonat erfolgt unter Eliminierung des monofunktionellen Alkohols oder Phenols aus dem Carbonat-Molekül.

Die nach dem erfindungsgemäßen Verfahren gebildeten hochfunktionellen hochverzweigten Polycarbonate sind nach der Reaktion, also ohne weitere Modifikation, mit Hydroxylgruppen und/oder mit Carbonatgruppen beziehungsweise Carbamoylchloridgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen beziehungsweise Carbamoylchloridgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end oder seitenständige funktionelle Gruppen auf.

Bei der Herstellung der hochfunktionellen Polycarbonate ist es notwendig, das Verhältnis von den OH-Gruppen enthaltenden Verbindungen zu Phosgen oder Carbonat so einzustellen, dass das resultierende einfachste Kondensationsprodukt (im Weiteren Kondensationsprodukt (K) genannt) im Mittel entweder eine Carbonat- oder Carbamoylchloridgruppe und mehr als eine OH-Gruppe oder eine OH-Gruppe und mehr als eine Carbonat- oder Carbamoylchloridgruppe enthält.

Die einfachste Struktur des Kondensationsproduktes (K), dargestellt am Beispiel der Umsetzung eines Carbonats (A) mit einem Di- oder Polyalkohol (B) ergibt dabei die Anordnung XYₘ oder YₘX, wobei X eine Carbonatgruppe, Y eine Hydroxyl-Gruppe und m in der Regel eine ganze Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im folgenden generell "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1:1, so resultiert im Mittel ein Molekül des Typs XY, veranschaulicht durch die allgemeine Formel 1.

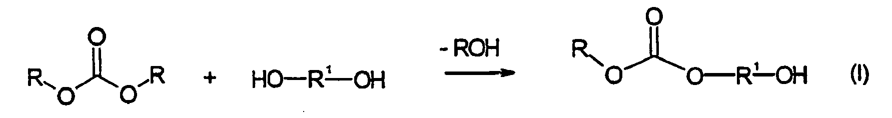

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs XY₂, veranschaulicht durch die allgemeine Formel 2. Fokale Gruppe ist hier eine Carbonatgruppe.

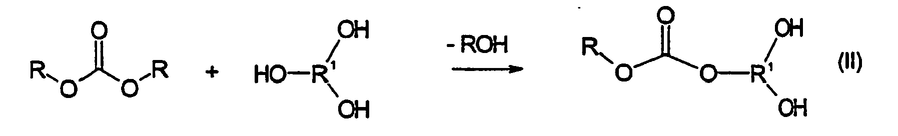

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs XY₃, veranschaulicht durch die allgemeine Formel 3. Fokale Gruppe ist hier eine Carbonatgruppe.

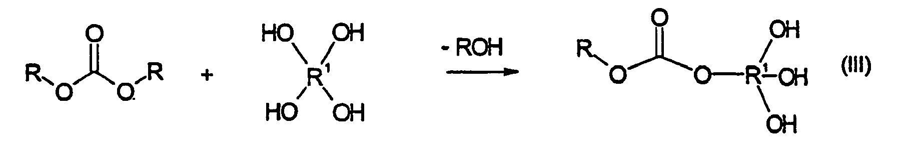

In den Formeln 1 bis 3 hat R die eingangs definierte Bedeutung und R¹ steht für einen aliphatischen oder aromatischen Rest.

Weiterhin kann die Herstellung des Kondensationsprodukts (K) zum Beispiel auch aus einem Carbonat und einem dreiwertigen Alkohol, veranschaulicht durch die allgemeine Formel 4, erfolgen, wobei das Umsetzungsverhältnis bei molar 2:1 liegt. Hier resultiert im Mittel ein Molekül des Typs X₂Y, fokale Gruppe ist hier eine OH-Gruppe. In der Formel 4 haben R und R¹ die gleiche Bedeutung wie in den Formeln 1 bis 3.

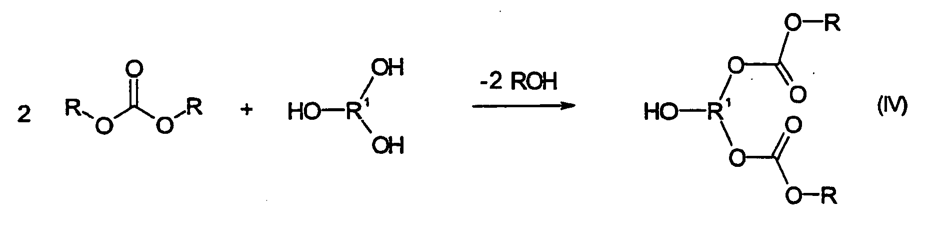

Werden zu den Komponenten zusätzlich difunktionelle Verbindungen, z.B ein Dicarbonat oder ein Diol gegeben, so bewirkt dies eine Verlängerung der Ketten, wie beispielsweise in der allgemeinen Formel 5 veranschaulicht. Es resultiert wieder im Mittel ein Molekül des Typs XY₂, fokale Gruppe ist eine Carbonatgruppe.

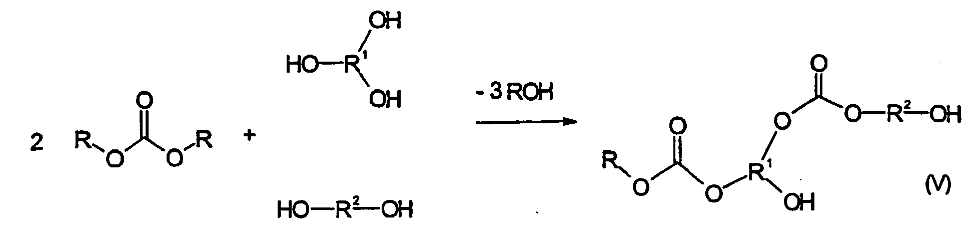

In Formel 5 bedeutet R² einen aliphatischen oder aromatischen Rest, R und R¹ sind wie vorstehend beschrieben definiert.

Es können auch mehrere Kondensationsprodukte (K) zur Synthese eingesetzt werden. Hierbei können einerseits mehrere Alkohole beziehungsweise mehrere Carbonate eingesetzt werden. Weiterhin lassen sich durch die Wahl des Verhältnisses der eingesetzten Alkohole und der Carbonate bzw. der Phosgene Mischungen verschiedener Kondensationsprodukte unterschiedlicher Struktur erhalten. Dies sei am Beispiel der Umsetzung eines Carbonates mit einem dreiwertigen Alkohol beispielhaft erläutert. Setzt man die Ausgangsprodukte im Verhältnis 1:1 ein, wie in (II) dargestellt, so erhält man ein Molekül XY_{2.} Setzt man die Ausgangsprodukte im Verhältnis 2.1 ein, wie in (IV) dargestellt, so erhält man ein Molekül X₂Y. Bei einem Verhältnis zwischen 1:1 und 2:1 erhält man eine Mischung von Molekülen XY₂ und X₂Y.

Die beispielhaft in den Formeln 1 - 5 beschriebenen einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 300 °C, bevorzugt 0 bis 250°C, besonders bevorzugt bei 60 bis 200°C und ganz besonders bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol oder das Phenol ROH kann zur Beschleunigung der Reaktion aus dem Reaktionsgleichgewicht entfernt werden, zum Beispiel destillativ, gegebenenfalls bei vermindertem Druck.

Falls Abdestillieren vorgesehen ist, ist es regelmäßig empfehlenwert, solche Carbonate einzusetzen, welche bei der Umsetzung Alkohole oder Phenole ROH mit einem Siedepunkt von weniger als 140°C bei dem vorliegenden Druck freisetzen.

Zur Beschleunigung der Reaktion können auch Katalysatoren oder Katalysatorgemische zugegeben werden. Geeignete Katalysatoren sind Verbindungen, die Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetrabutylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, daß aus der Kondensationsreaktion Polykondensationsprodukte (P) mit unterschiedlichen Strukturen resultierten können, die Verzweigungen, aber keine Vernetzungen aufweisen. Ferner weisen die Polykondensationsprodukte (P) im Idealfall entweder eine Carbonat- oder Carbamoylchloridgruppe als fokale Gruppe und mehr als zwei OH-Gruppen oder aber eine OH-Gruppe als fokale Gruppe und mehr als zwei Carbonat-oder Carbamoylchloridgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

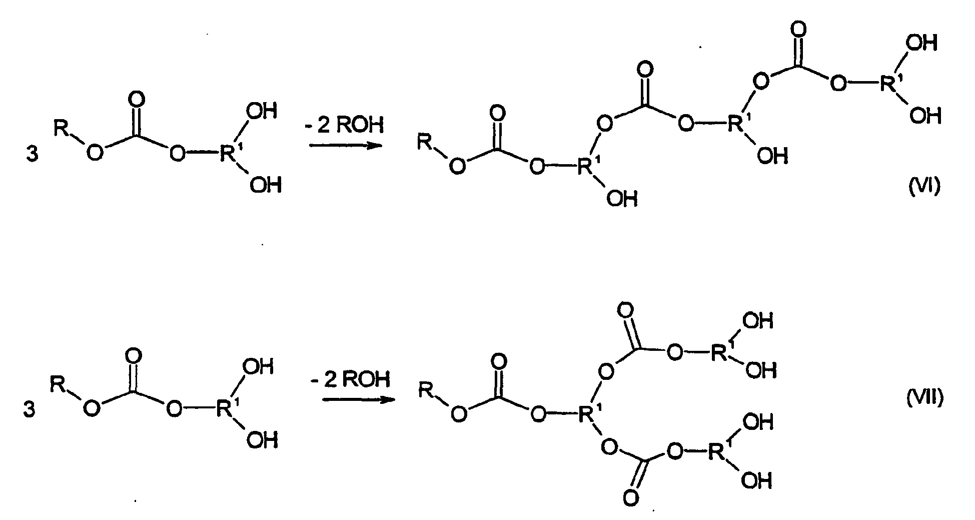

In Formel 6 und 7 sind R und R¹ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

Weiterhin kann man den Katalysator desaktivieren, bei basischen Katalysatoren zum Beispiel durch Zugabe einer sauren Komponente, zum Beispiel einer Lewis-Säure oder einer organischen oder anorganischen Protonensäure.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform wird das Produkt gestrippt, dass heißt von niedermolekularen, flüchtigen Verbindungen befreit. Dazu kann nach Erreichen des gewünschten Umsatzgrades der Katalysator optional desaktiviert und die niedermolekularen flüchtigen Bestandteile, zum Beispiel Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

In einer weiteren bevorzugten Ausführungsform können die erfindungsgemäßen Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten von den Carbonat-, Carbamoylchlorid oder Hydroxylgruppen verschiedenen Funktionalitäten.

Derartige Effekte lassen sich zum Beispiel durch Zusatz von Verbindungen während der Polykondensation erzielen, die neben Hydroxylgruppen, Carbonatgruppen oder Carbamoylchloridgruppen weitere funktionelle Gruppen oder funktionelle Elemente, wie Mercaptogruppen, primäre, sekundäre oder tertiäre Aminogruppen, Ethergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder langkettige Alkylreste tragen. Zur Modifikation mittels Carbamat-Gruppen lassen sich beispielsweise Ethanolamin, Propanolamin, Isopropanolamin, 2-(Butylamino)-ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanol-amin, Tris(hydroxymethyl)aminomethan,Tris(hydroxyethyl)aminomethan, Ethylendiamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von Triethanolamin, Tripropanolamin, N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Zugabe von Dicarbonsäuren, Tricarbonsäuren, Dicarbonsäureestern, wie bespielsweise Terephthalsäuredimethylester oder Tricarbonsäureestem lassen sich Estergruppen erzeugen. Durch Reaktion mit langkettigen Alkanolen oder Alkandiolen lassen sich langkettige Alkylreste einbringen. Die Reaktion mit Alkyl- oder Aryldiisocyanaten generiert Alkyl-, Aryl- und Urethangruppen aufweisende Polycarbonate, die Zugabe von primären oder sekundären Aminen führt zur Einbringung von Urethan- oder Harnstoffgruppen.

Eine nachträgliche Funktionalisierung kann man erhalten, indem das erhaltene hochfunktionelle, hoch- oder hyperverzweigte Polycarbonat in einem zusätzlichen Verfahrensschritt (Schritt c)) mit einem geeigneten Funktionalisierungsreagenz, welches mit den OH- und/oder Carbonat- oder Carbamoylchlorid-Gruppen des Polycarbonates reagieren kann, umsetzt.

Hydroxylgruppen enthaltende hochfunktionelle, hoch oder hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.
Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden.

Ein großer Vorteil des erfindungsgemäßen Verfahren liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Die gemäß dem erfindungsgemäßen Verfahren erhaltenen hochfunktionellen, hoch- oder hyperverzweigten Polycarbonate können beispielsweise als Haftvermittler, Thixotropiermittel oder als Bausteine zur Herstellung von Polyadditions- oder Polykondensationspolymeren verwendet werden, beispielweise als Komponenten zur Herstellung von Lacken, Überzügen, Klebstoffen, Dichtmassen, Gießelastomeren oder Schaumstoffen.

Sie eignen sich insbesondere zur Herstellung von Druckfarben, wie Flexo-, Tief-, Offset- oder Siebduckfarben sowie zur Herstellung von Drucklacken. Insbesondere sind die erfindungsgemäßen Polycarbonate zur Herstellung von dünnflüssigen Druckfarben, wie Flexo- oder Tiefdruckfarben für den Verpackungsdruck geeignet. Sie können zu verschiedenen Zwecken in Druckfarben eingesetzt werden, aber insbesondere als Bindemittel, ggf. auch im Gemisch mit anderen Bindemitteln.

Die erfindungsgemäßen Polycarbonate werden zu diesem Zweck mit geeigneten Lösemitteln, Farbmitteln, optional weiteren Bindemitteln sowie druckfarbentypischen Zusatzstoffen formuliert. Zu weiteren Einzelheiten zur Formulierung und Herstellung von Druckfarben mit hyperverzweigten Polymeren wird ausdrücklich auf WO 02/36695 sowie WO 02/26697 verwiesen, insbesondere auf die Ausführungen in WO 02/36695, Seite 10, Zeile 19 bis Seite 15, Zeile 14 sowie WO 02/36697, Seite 7, Zeile 14 bis Seite 10, Zeile 18 sowie die in den besagten Schriften aufgeführten Beispiele.

Druckfarben, welche die erfindungsgemäßen Polycarbonate enthalten, weisen eine besonders gute, bislang nicht bekannte, Haftung auf den Substraten, insbesondere auf Metall- und/oder Polymerfolien auf.

Die Druckfarben eignen sich daher auch ganz besonders zur Herstellung von Laminaten aus zwei oder mehreren Polymer- und/oder Metallfolien, bei denen eine Folie mit einer oder mehreren Schichten einer Druckfarbe bedruckt und auf die gedruckte Schicht eine zweite Folie aufkaschiert wird. Derartige Verbunde werden beispielsweise zur Herstellung von Verpackungen eingesetzt.

Die vorliegende Erfindung soll anhand der nachfolgenden Beispiele näher erläutert werden.

Allgemeine Arbeitsvorschrift:

Der mehrfunktionelle Alkohol oder die Alkoholmischung, das Carbonat, sowie gegebenfalls andere Monomere, und Katalysator (250 ppm bezogen auf Masse Alkohol) wurden nach den Ansatzmengen gemäß Tabelle 1 in einem Dreihalskolben, ausgestattet mit Rührer, Rückflusskühler und Innenthermometer vorgelegt, die Mischung auf 120°C, bei den mit * gekennzeichneten Versuchen auf 140°C erwärmt, und 2 h bei dieser Temperatur gerührt. Mit fortschreitender Reaktionsdauer reduzierte sich dabei die Temperatur des Reaktionsgemisches bedingt durch die einsetzende Siedekühlung des freigesetzten Monoalkohols. Nun wurde der Rückflusskühler gegen einen absteigenden Kühler getauscht, optional (gekennzeichnet durch **) bezogen auf die Äquivalentmenge Katalysator ein Äquivalent Phosphorsäure zugegeben, der Monoalkohol abdestilliert und die Temperatur des Reaktionsgemisches langsam bis auf 160°C erhöht.

Bei dem mit *** gekennzeichneten Versuch wurde zusätzlich der Druck auf 8 mbar verringert.

Der abdestillierte Alkohol wurde in einem gekühlten Rundkolben gesammelt, ausgewogen und der Umsatz so gegenüber dem theoretisch möglichen Vollumsatz prozentual ermittelt (siehe Tabelle 1).

Die Reaktionsprodukte wurden anschließend per Gelpermeationschromatographie analysiert, Laufmittel war Dimethylacetamid, als Standard wurde Polymethylmethacrylat (PMMA) verwendet.

**Tabelle 1: Einsatzstoffe und Endprodukte**

| Bsp. Nr. | Alkohol oder Alkoholmischung | Carbonat oder Carbonat + andere Monomere | Molverhältnis Alkohol : Carbonat | Katalysator | Destillat, Alkoholmenge bez. auf Vollumsatz Mol% | Molekulargewicht Produkt (g/mol) Mw Mn | Visk. 23°C Produkt (mPas) | OH- Zahl Produkt (mg KOH/g) nach DIN 53240, Teil 2 |
|---|---|---|---|---|---|---|---|---|
| 1 | TMP | DMC | 1:1 | K₂CO₃ | 90 | 2150 | 9960^{a} | 583 |
| | | | | | | 1300 | | |
| 2 | TMP | DMC | 1:2 | K₂CO₃ | 90 | 10500 | 159000^{a} | - |
| | | | | | | 3800 | | |
| 3 | TMP x 1,2 EO | DMC | 1:2 | K₂CO₃ | 90 | 12500 | 22100^{a} | - |
| | | | | | | 3500 | | |
| 4** | TMP x 3 EO | DEC | 1:1 | K₂CO₃ | 90 | 4100 | 4020 | 310 |
| | | | | | | 2500 | | |
| 5 | TMP x 3 EO | DEC | 1:1 | K₂CO₃ | 70 | 2900 | 780 | 349 |
| | | | | | | 1850 | | |
| 6 | TMP x 12 EO | DEC | 1:1 | K₂CO₃ | 70 | 4400 | 550 | 180 |
| | | | | | | 2500 | | |
| 7 | TMP x 12 EO | DEC | 1:1 | K₂CO₃ | 90 | 5500 | 990 | 164 |
| | | | | | | 2700 | | |
| 8*** | TMP x 1,2 EO | DEC | 1:1 | K₂CO₃ | 98 | 14700 | 3500 | 145 |
| | | | | | | 5700 | | |
| 9 | TMP x 1,2 PO | DEC | 1:1 | K₂CO₃ | 90 | 2800 | 37000 | 436 |
| | | | | | | 1800 | | |
| 10 | TMP x 1,2 PO | DEC | 1:1 | K₂CO₃ | 70 | 2100 1450 | 7220 | 461 |
| 11* | TMP x 5,4 PO | DEC | 1:1 | KOH | 70 | 7800 2500 | 1260 | 227 |
| 12** | Glyc x 5 EO | DEC | 1:1 | K₂CO₃ | 90 | 3900 2700 | 1160 | 295 |
| 13 | Glyc x 5 EO | DEC | 1:1 | K₂CO₃ | 70 | 3200 2200 | 470 | 307 |
| 14* | Glyc x 7,5 PO | DEC | 1:1 | KOH | 85 | 4200 2600 | 1340 | 225 |
| 15 | TMP x 1,2 EO + CHD 3:1 molar | DEC | 0,75: 0,25:1 | K₂CO₃ | 90 | 3500 2100 | 64400 | 384 |
| 16 | TMP x 1,2 EO + CHDM 3:1 molar | DEC | 0,75: 0,25:1 | K₂CO.₃ | 90 | 3800 2200 | 76800 | 369 |
| 17 | THEA | DEC | 1:1 | K₂CO₃ | 90 | 1600 1100 | 13800 | 687 |
| 18 | TMP x 1,2 EO | DEC | 1:1 | K₂CO₃ | 70 | 2200 1500 | 3820 | 498 |
| 19 | TMP x 1,2 EO | DEC | 1:1 | K₂CO₃ | 90 | 4000 2200 | 73000 | 436 |
| 20 | TMP x 5,4 PO | DEC | 1:1,5 | KOH | n.b. | 130000 5700 | 5220^{b} | 116 |
| 21 | TMP x 3 EO | DEC | 1:1,1 | K₂CO₃ | n.b. | 79000 5000 | 11200^{b} | 219 |
| 22* | THEIC | DEC | 1:1 | KOH | 85 | 3800 900 | n.b. | 93 |
| 23* | TMP x 3 EO + Octadecanol 4:1 molar | DEC | 0,8: 0,2:1 | K₂CO₃ | 85 | 12400 3000 | n.b. | 169 |
| 24 | TMP x 1,2 PO | DEC + TDME | 1:0,8 DEC :0,2 TDME | K₂CO₃ | 80 | 5100 2200 | 11500^{b} | 329 |
| 25 | TMP x 1,2 PO | DEC + TDME | 1:0,6 DEC :0,4 TDME | K₂CO₃ | 80 | 8600 3200 | 33100^{b} | 281 |
| 26* | TMP x 1,2 PO + Hydrochinon 4:1 molar | DEC | 0,8:0,2:1 | K₂CO₃ | 80 | 3300 1400 | 26800^{b} | 380 |
| 27* | TMP x 3 EO | DEC | 0,8:0,2:1 | K₂CO₃ | 97 | 1700 | 4200^{b} | 390 |
| | + | | | | | 1050 | | |
| | Bisphenol A | | | | | | | |
| | 4:1 molar | | | | | | | |

| | | | | | | | | |
|---|---|---|---|---|---|---|---|---|
| Glyc = Glycerin EO = Ethylenoxid TMP = Trimethylolpropan PO = Propylenoxid CHD = 1,4-Cyclohexandiol THEA = Tris(hydroxyethyl)amin CHDM = 1,4-Cyclohexandimethanol TDME = Terephthalsäuredimethylester THEIC = Tris(N-2-hydroxyethyl)isocyanurat Bisphenol A = 2,2-Bis(p-hydroxyphenyl)propan DMC = Dimethylcarbonat DPC = Diphenylcarbonat DEC = Diethylcarbonat ^{a} = Viskositätsmessung erfolgte 90%ig in Butylacetat ^{b} = Viskositätsmessung erfolgte 90%ig in Ethylacetat n.b. = nicht bestimmt | | | | | | | | |

Druckfarben mit den erfindungsgemäßen hoch- oder hyperverzweigten Polycarbonaten

Die Qualität der erfindungsgemäßen Druckfarben wurde anhand der Haftfestigkeit auf verschiedenen Bedruckstoffen bestimmt.

### Messmethode Tesafestigkeit

Das Prüfverfahren "Tesafestigkeit" dient zur Bestimmung der Haftung eines Druckfarbenfilms auf dem Bedruckstoff.

### Herstellen der Proben

Die auf Druckviskosität verdünnte Farbe wird auf dem vorgeschriebenen Bedruckstoff angedruckt oder mit einem 6 µm-Rakel aufgezogen.

### Durchführung der Prüfung

Ein Tesabandstreifen (Klebeband mit 19 mm Breite (Artikel BDF 4104, Beiersdorf AG) wird auf den Druckfarbenfilm aufgeklebt, gleichmäßig angedrückt und nach 10 Sekunden wieder abgerissen. Dieser Vorgang wird auf derselben Stelle des Prüflings jeweils mit einem neuen Tesabandstreifen 4 mal wiederholt. Jeder Tesastreifen wird nacheinander auf ein weißes Papier, bei weißen Farben auf Schwarzpapier aufgeklebt. Die Prüfung erfolgt sofort nach Applikation der Farbe.

### Auswertung

Es erfolgt eine visuelle Prüfung der Oberfläche des Prüflings auf Beschädigung. Die Benotung erfolgt von 1 (sehr schlecht) bis 5 (sehr gut).

Für die Beispiele wurden folgende Rezepturen (Gew. Teile) gewählt:

### Standard-Rezeptur A (Vergleich)

| | |
|---|---|
| 70,0 | Pigment Präparation (BASF Drucksysteme) |
| 8,0 | Nitrocellulose (Wolf) |
| 1,0 | Oleamid (Croda) |
| 0,5 | PE-Wachse (BASF AG) |
| 2,0 | Dibutylphthalat (Brenntag) |
| 12,5 | Ethanol |
| 6,0 | konventionelles Polyurethan PUR 7317 (BASF) |

### Rezeptur 1 (erfindungsgemäß)

| | |
|---|---|
| 70,0 | Pigment Präparation (BASF Drucksysteme) |
| 8,0 | Nitrocellulose (Wolf) |
| 1,0 | Oleamid (Croda) |
| 0,5 | PE-Wachse (BASF AG) |
| 2,0 | Dibutylphthalat (Brenntag) |
| 12,5 | Ethanol |
| 6,0 | Polymer aus Beispiel 4 (Tabelle 1), 75%ig gelöst in Ethanol |

**Tabelle 2: Standard-Bindemittel im Vergleich zu Polymer aus Beispiel 5 (Tabelle 1)**

| Beispiel | System | Bedruckstoff (Folie) | |
|---|---|---|---|
| | | Polypropylen | Polyamid |
| | | | Emblem 1500 |
| 28 (Vergleich) | Standard-Rezeptur A | 1 | 1 |
| 29 (erfindungsgemäß | Rezeptur 1 | 4 | 5 |
| | | | |

### Bestimmung der Verbundfestigkeit von Laminaten:

Zur Herstellung von Verbundverpackungen werden bedruckte Polymerfolien, beispielsweise Polyamid-, Polyethylen- oder Polypropylenfolien, mit anderen Folientypen, wie beispielsweise Metallfolien oder aber auch Kunstofffolien, durch Laminierung verbunden. Wichtige Anwendungseigenschaften derartiger Laminate für den Einsatz als Verbundverpackung sind neben der Festigkeit des Verbundes bei normaler Lagerung auch die Festigkeit des Verbundes unter verschärften Bedingungen, wie beispielsweise beim Erhitzen oder Sterilisieren.
Die Qualität der erfindungsgemäßen Druckfarben wurde durch Bestimmung der Verbundfestigkeit beurteilt. Unter Verbundfestigkeit versteht man die Bestimmung der Verbundhaftung zwischen zwei durch Kaschierung oder Extrusion verbundenen Filmen oder Metallfolien.

*Mess- und* Prüfgeräte:
Zugfestigkeitsprüfgerät Fa. Zwick
Stanzwerkzeug (Breite: 15mm)
*Herstellung* der *Proben:*

Vom zu testenden Material müssen mindestens je 2 Streifen (Breite: 15mm) längs und quer zur Folienbahn zugeschnitten werden. Zur Trennung des Verbundes werden die Enden der ausgestanzten Streifen können in entsprechendes Lösungsmittel (z.B. 2-Butanon) getaucht werden, bis sich die Materialien voneinander lösen. Danach muß das Muster wieder sorgfältig getrocknet werden.

### Durchführung der Prüfung:

Die delaminierten Enden der Prüflinge werden in den Zugfestigkeitsprüfer eingespannt. Der weniger dehnfähige Film sollte in die obere Klemme eingelegt werden. Beim Anlauf der Maschine sollte das Ende des Musters im rechten Winkel zur Zugrichtung gehalten werden, wodurch ein konstanter Zug gewährleistet wird. Die Abzugsgeschwindigkeit beträgt 100 mm/min, der Abzugswinkel der getrennten Filme zum nichtgetrennten Komplex beträgt 90°.

### Auswertung:

Abgelesen wird der Verbundwert als Mittelwert, Angabe in N / 15mm.

### Herstellung der Proben:

Die auf Druckviskosität verdünnte Farbe wird auf dem vorgeschriebenen Bedruckstoff Polyamid (Emblem 1500) angedruckt oder mit einem 6 µm-Rakel aufgezogen. Parallel dazu wird die Polyethylen-Kaschierfolie mit der Kleber-Härter-Mischung Morfree A415 (Kleber) und C90 (Härter, Rohm & Haas), Gewichts-Mischungsverhältnis 100:40, so beschichtet, dass eine Filmdicke von etwa 6 µm (entspricht etwa 2,5 g / m²) resultiert. Beide Folien werden anschließend so verpresst, dass die Druckfarbe und der Kleber in Kontakt kommen. Nach dem Verpressen werden die Verbundfolien 5 Tage bei 60°C gelagert.

Es wurden folgende Rezepturen (Gew. Teile) für die Beispiele gewählt

### Standard-Rezeptur B (Vergleich):

| | |
|---|---|
| 13,0 | Pigment Heliogen Blau D 7080 (BASF AG) |
| 15,0 | Bindemittel (Polyvinylbutyral) |
| 3,0 | Additiv (Polyethylenimin, BASF AG) |
| 69,0 | Ethanol |

### Rezeptur 1 (erfindungsgemäß)

| | |
|---|---|
| 70,0 | Pigment Präparation (BASF Drucksysteme) |
| 8,0 | Nitrocellulose (Wolf) |
| 1,0 | Oleamid (Croda) |
| 0,5 | PE-Wachse (BASF AG) |
| 2,0 | Dibutylphthalat (Brenntag) |
| 12,5 | Ethanol |
| 6,0 | Polymer aus Beispiel 4 (Tabelle 1), 75%ig gelöst in Ethanol |

Beispiel 30: Verbundwerte für das Laminat aus Polyamid und Polyethylen:

| | Verbundwert (N/15mm): |
|---|---|
| Standard-System B (Vergleich): | 4,19 |
| Rezeptur 1 (erfindungsgemäß) | 8,90 |

## Patentansprüche

1. Verfahren zur Herstellung von hochfunktionellen, hoch- oder hyperverzweigten Polycarbonaten mit einem Verzweigungsgrad von 10 bis 99,9 %, umfassend mindestens die folgenden Schritte:
a) Herstellung eines oder mehrerer Kondensationsprodukte (K) durch
aa) Umsetzung mindestens eines organischen Carbonats (A) der allgemeinen Formel RO[(CO)O]ₙR mit mindestens einem aliphatischen, aromatischlaliphatischen oder aromatischen Alkohol (B), welcher mindestens 3 OH-Gruppen aufweist, unter Eliminierung von Alkoholen ROH, wobei es sich bei R jeweils unabhängig voneinander um einen geradkettigen oder verzweigten aliphatischen, aromatisch/aliphatischen oder aromatischen Kohlenwasserstoffrest mit 1 bis 20 C-Atomen handelt, und wobei die Reste R auch unter Bildung eines Ringes miteinander verbunden sein können, und n eine ganze Zahl zwischen 1 und 5 darstellt
oder
ab) Umsetzung von Phosgen, Diphosgen oder Triphosgen mit dem besagten aliphatischen, aliphatisch/aromatischen oder aromatischen Alkohol (B) unter Eliminierung von Chlorwasserstoff,
sowie
b) intermolekulare Umsetzung der Kondensationsprodukte (K) zu einem hochfunktionellen, hoch- oder hyperverzweigten Polycarbonat,
wobei es sich bei den Alkoholen (B) um tri- oder höherfunktionelle Polyetherole auf Basis tri- oder höherfunktioneller Alkohole und Ethylenoxid, Propylenoxid oder Butylenoxid oder deren Gemischen handelt, und
wobei das Mengenverhältnis der OH-Gruppen zu den Phosgenen oder den Carbonaten im Reaktionsgemisch so gewählt wird, dass die Kondensationsprodukte (K) im Mittel entweder eine Carbonat- oder Carbamoylchloridgruppe und mehr als eine OH-Gruppe oder eine OH-Gruppe und mehr als eine Carbonat- oder Carbamoylchloridgruppe aufweisen, und man die Reaktion in Gegenwart mindestens eines geeigneten Katalysators durchführt.

2. Verfahren gemäß Anspruch 1, **dadurch gekennzeichnet; dass** das Reaktionsgemisch zusätzlich mindestens einen zwei OH-Gruppen aufweisenden aliphatischen oder aromatischen Alkohol (B') umfasst, mit der Maßgabe, dass die mittlere OH-Funktionalität aller eingesetzten Alkohole zusammen größer als 2 ist.

3. Verfahren gemäß Anspruch 1 oder 2, **dadurch gekennzeichnet, dass** es sich bei R um einen geradkettigen oder verzweigten Alkylrest mit 1 bis 5 C-Atomen handelt.

4. Verfahren gemäß einem der Ansprüche 1 bis 3, **dadurch gekennzeichnet, dass** es sich bei n um eine ganze Zahl von 1 bis 3 handelt.

5. Verfahren gemäß einem der Ansprüchen 1 bis 4, **dadurch gekennzeichnet, dass** es sich bei dem organischen Carbonat (A) um mindestens eines ausgewählt aus der Gruppe von Dimethylcarbonat, Diethylcarbonat, Dipropylcarbonat, Dibutylcarbonat, Diisobutylcarbonat, Ethylencarbonat, Propylencarbonat, Diphenylcarbonat oder Di(t-butyl)tricarbonat handelt.

6. Verfahren gemäß einem der Ansprüche 1 bis 5, **dadurch gekennzeichnet, dass** es sich bei den mindestens 3 OH-Gruppen aufweisenden Alkoholen (B) um mindestens einen ausgewählt aus der Gruppe von Polyetherolen auf Basis von Ethylenoxid und/oder Propylenoxid von Glycerin, Trimethylolethan, Trimethylolpropan, 1,2,4-Butantriol oder Pentaerythrit handelt.

7. Verfahren gemäß einem der Ansprüche 1 bis 6, **dadurch gekennzeichnet, dass** man Chlorwasserstoff oder die gebildeten Alkohole ROH aus dem Reaktionsgemisch entfernt.

8. Verfahren gemäß einem der Ansprüche 1 bis 7, **dadurch gekennzeichnet, dass** man die Reaktion unter vermindertem Druck durchführt.

9. Verfahren gemäß einem der Ansprüche 1 bis 8, **dadurch gekennzeichnet, dass** es sich bei dem Katalysator um mindestens einen ausgewählt aus der Gruppe von Kaliumhydroxid. Kaliumcarbonat, Kaliumhydrogencarbonat, Diazabicyclooctan (DABCO), Diazabicyclononen (DBN), Diazabicycloundecen (DBU), Imidazol, 1-Methylimidazol, 1,2-Dimethylimidazol, Titan-tetrabutylat, Titantetraisopropylat, Dibutylzinnoxid, Dibutylzinn-dilaurat, Zinndioctoat oder Zirkonacetylacetonat handelt.

10. Verfahren gemäß einem der Ansprüche 1 bis 9, **dadurch gekennzeichnet, dass** man das erhaltene hochfunktionelle, hoch- oder hyperverzweigte Polycarbonat in einem zusätzlichen Verfahrensschritt (Schritt c)) mit einem geeigneten Funktionalisierungsreagenz, welches mit den OH- und/oder Carbonat-oder Carbamoylchlorid-Gruppen des Polycarbonates reagieren kann, umsetzt.

11. Verfahren gemäß einem der Ansprüche 1 bis 10, **dadurch gekennzeichnet, dass** man das hochfunktionelle, hoch- oder hyperverzweigte Polycarbonat modifiziert, indem man Schritt b) bei Anwesenheit zusätzlicher Verbindungen durchführt, die neben OH-Gruppen, Carbonat- oder Carbamoylchloridgruppen noch weitere funktionale Gruppen oder funktionale Elemente aufweisen.

12. Hochfunktionelle, hoch- oder hyperverzweigte, mindestens 3 funktionelle Gruppen aufweisende Polycarbonate mit einem Verzweigungsgrad von 10 bis 99,9 % erhältlich nach einem Verfahren gemäß einem der Ansprüche 1 bis 11.

13. Hochfunktionelle, hoch- oder hyperverzweigte Polycarbonate gemäß Anspruch 12, **dadurch gekennzeichnet, dass** der Verzweigungsgrad 20 bis 95 % beträgt, und sie mindestens 10 funktionelle Gruppen aufweisen.

14. Verwendung von hochfunktionellen, hoch- oder hyperverzweigten Polycarbonaten gemäß Ansprüchen 12 oder 13 als Haftvermittler, Thixotropiermittel und als Bausteine zur Herstellung von Polyadditions- oder Polykondensationspolymeren.

15. Verwendung von hochfunktionellen, hoch- oder hyperverzweigten Polycarbonaten gemäß Ansprüchen 12 oder 13 zur Herstellung von Lacken, Überzügen, Klebstoffen, Dichtmassen, Giesselastomeren oder Schaumstoffen.

16. Verwendung von hochfunktionellen, hoch- oder hyperverzweigten Polycarbonaten gemäß Ansprüchen 12 oder 13 als Bindemittel zur Herstellung von Druckfarben oder Drucklacken.

17. Verwendung gemäß Anspruch 16, **dadurch gekennzeichnet, dass** es sich bei den Druckfarben um Verpackungsdruckfarben handelt.

18. Verwendung von hochfunktionellen, hoch- oder hyperverzweigten Polycarbonaten gemäß Ansprüchen 12 oder 13 zur Herstellung von Laminaten aus zwei oder mehreren Polymer- und/oder Metallfolien, bei denen eine Folie mit einer oder mehreren Schichten einer Druckfarbe, welche die besagten Polycarbonate als Bindemittel enthält, bedruckt und auf die bedruckte Schicht eine zweite Folie aufkaschiert wird.

## Claims

1. A process for preparing a high-functionality highly or hyper-branched polycarbonate having a degree of branching of from 10 to 99.9%, comprising at least the following steps:
a) preparation of one or more condensation products (K) by
aa) reaction of at least one organic carbonate (A) of the formula RO[(CO)O]ₙR with at least one at least trihydric aliphatic, aromatic/aliphatic or aromatic alcohol (B) with elimination of alcohols ROH, each R independently at each occurrence being a straight-chain or branched aliphatic, aromatic/aliphatic or aromatic hydrocarbon radical having 1 to 20 carbon atoms, and it also being possible for the radicals R to be joined to one another to form a ring, and n being an integer between 1 and 5,
or
ab) reaction of phosgene, diphosgene or triphosgene with the said aliphatic, aliphatic/aromatic or aromatic alcohol (B) with elimination of hydrogen chloride,
and also
b) intermolecular reaction of the condensation products (K) to form a high-functionality highly or hyper-branched polycarbonate,
the alcohols (B) being trifunctional or higher polyfunctional polyetherols based on trihydric or higher polyhydric alcohols and ethylene oxide, propylene oxide or butylene oxide or mixtures thereof, and
the proportion of OH groups to phosgenes or carbonates in the reaction mixture being selected such that the condensation products (K) contain on average either one carbonate or carbamoyl chloride group and more than one OH group or one OH group and more than one carbonate or carbamoyl chloride group, and the research being conducted in the presence of at least one suitable catalyst.

2. The process according to claims 1, wherein the reaction mixture further comprises at least one dihydric aliphatic or aromatic alcohol (B'), with the proviso that the average OH functionality of all of the alcohol used is together greater than 2.

3. The process according to claims 1 or 2, wherein R is a straight-chain or branched alkyl radical having 1 to 5 carbon atoms.

4. The process according to any one of claims 1 to 3, wherein n is an integer from 1 to 3.

5. The process according to any one of claim 1 to 4, wherein the organic carbonate (A) is at least one selected from the group consisting of dimethyl carbonate, diethyl carbonate, dipropyl carbonate, dibutyl carbonate, diisobutyl carbonate, ethylene carbonate, propylene carbonate, diphenyl carbonate, and di-tert-butyl tricarbonate.

6. The process according to any one of claims 1 to 5, wherein the at least trihydric alcohol (B) is at least one selected from the group consisting of polyetherols based on ethylene oxide and/or propylene oxide of glycerol, trimethylolethane, trimethylolpropane, 1,2,4-butanetriol or pentaerythritol.

7. The process according to any one of claims 1 to 6, wherein hydrogen chloride or the resultant alcohols ROH are removed from the reaction mixture.

8. The process according to any one of claims 1 to 7, wherein the reaction is conducted under reduced pressure.

9. The process according to any one of claims 1 to 8, wherein the catalyst is at least one selected from the group consisting of potassium hydroxide, potassium carbonate, potassium hydrogencarbonate, diazabicyclooctane (DABCO), diazabicyclononene (DBN), diazabicycloundecene (DBU), imidazole, 1-methylimidazole, 1,2-dimethylimidazole, titanium tetrabutoxide, titanium tetraisopropoxide, dibutyltin oxide, dibutyltin dilaurate, tin dioctoate and zirconium acetylacetonate,

10. The process according to any one of claims 1 to 9, wherein the high-functionality highly or hyper-branched polycarbonate obtained is reacted in an additional step (step c)) with a suitable functionalizing reagent able to react with the OH and/or carbonate or carbamoyl chloride groups of the polycarbonate.

11. The process according to any one of claims 1 to 10, wherein the high-functionality highly or hyper-branched polycarbonate is modified by conducting step b) in the presence of additional compounds having functional elements or further functional groups in addition to OH, carbonate or carbamoyl chloride groups.

12. A high-functionality highly or hyper-branched polycarbonate having a degree of branching of from 10 to 99.9% containing at least 3 functional groups and obtainable by a process according to any one of claims 1 to 11.

13. A high-functionality highly or hyper-branched polycarbonate according to claim 12, wherein the degree of branching is from 20 to 95% and it has at least 10 functional groups.

14. The use of a polycarbonate according to claim 12 or 13 has an adhesion promoter or thixotropic agent or as a building block for preparing polyaddition or polycondensation polymers.

15. The use of a polycarbonate according to claim 12 or 13 for preparing paints, coatings, adhesives, sealants, casting elastomers or foams.

16. The use of a Polycarbonate according to claim 12 or 13 as a binder for preparing printing inks or print varnishes.

17. The use according to claim 16, wherein the printing inks are packaging inks.

18. The use of a high-functionality highly or hyper-branched polycarbonate according to claim 12 or 13 for producing laminates of two or more polymer films and/or metal foils, in which one foil or film is printed with one or more layers of a printing ink which comprises the said polycarbonate as a binder and a second foil or film is laminated onto the printed layer.

## Revendications

1. Procédé de fabrication de polycarbonates hautement fonctionnels, hautement ou hyperramifiés, qui présentent un degré de ramification de 10 à 99,9 %, qui comprend au moins les étapes suivantes :
a) fabrication d'un ou de plusieurs produits de condensation (K) par
(aa) mise en réaction d'au moins un carbonate organique (A) de formule générale RO[(CO)O]ₙR avec au moins un alcool (B) aliphatique, aromatique/aliphatique ou aromatique, qui comporte au moins 3 groupes OH, avec élimination d'alcools ROH, les R représentant, à chaque fois indépendamment les uns des autres, un radical hydrocarboné linéaire ou ramifié, aliphatique, aromatique/aliphatique ou aromatique, ayant 1 à 20 atomes C, les radicaux R pouvant également être reliés les uns aux autres en formant un cycle, et n représentant un nombre entier compris entre 1 à 5
ou
ab) mise en réaction de phosgène, de diphosgène ou de triphosgène avec ledit alcool (B) aliphatique, aliphatique/aromatique ou aromatique avec élimination de chlorure d'hydrogène,
et
b) transformation intermoléculaire des produits de condensation (K) pour former un polycarbonate hautement fonctionnel, hautement ou hyperramifié,
dans lequel les alcools (B) sont des polyéthérols trifonctionnels ou d'une fonctionnalité supérieure à base d'alcools trifonctionnels ou d'une fonctionnalité supérieure et d'oxyde d'éthylène, d'oxyde de propylène ou d'oxyde de butylène ou leurs mélanges et
dans lequel le rapport entre les quantités de groupes OH et de phosgènes ou de carbonates dans le mélange réactionnel est choisi de manière à ce que les produits de condensation (K) comportent en moyenne un groupe carbonate ou chlorure de carbamoyle et plus d'un groupe OH ou un groupe OH et plus d'un groupe carbonate ou chlorure de carbamoyle et la réaction est réalisée en présence d'au moins un catalyseur approprié.

2. Procédé selon la revendication 1, **caractérisé en ce que** le mélange réactionnel contient également au moins un alcool (B') aliphatique ou aromatique comportant deux groupes OH, à condition que la fonctionnalité OH moyenne de tous les alcools utilisés pris ensemble soit supérieure à 2.

3. Procédé selon la revendication 1 ou 2, **caractérisé en ce que** R est un radical alkyle linéaire ou ramifié ayant 1 à 5 atomes C.

4. Procédé selon l'une quelconque des revendications 1 à 3, **caractérisé en ce que** n est un nombre entier de 1 à 3.

5. Procédé selon l'une quelconque des revendications 1 à 4, **caractérisé en ce que** le carbonate organique (A) est au moins un carbonate organique choisi dans le groupe du carbonate de diméthyle, carbonate de diéthyle, carbonates de dipropyle, carbonate de dibutyle, carbonate de diisobutyle, carbonate d'éthylène, carbonate de propylène, carbonate de diphényle ou tricarbonate de di (t-butyle).

6. Procédé selon l'une quelconque des revendications 1 à 5, **caractérisé en ce que** les alcools (B) comportant au moins 3 groupes OH sont au moins un alcool choisi dans le groupe des polyéthérols à base d'oxyde d'éthylène et/ou d'oxyde de propylène de glycérine, de triméthyloléthane, de triméthylolpropane, de 1,2,4-butanetriol ou de pentaérythrite.

7. Procédé selon l'une quelconque des revendications 1 à 6, **caractérisé en ce que** le chlorure d'hydrogène ou les alcools ROH formés sont éliminés du mélange réactionnel.

8. Procédé selon l'une quelconque des revendications 1 à 7, **caractérisé en ce que** la réaction est réalisée sous pression réduite.

9. Procédé salon l'une quelconque des revendications 1 à 8, **caractérisé en ce que** le catalyseur est au moins un catalyseur choisi dans le groupe de l'hydroxyde de potassium, le carbonate de potassium, l'hydrogénocarbonate de potassium, le diazabicyclooctane (DABCO), les diazabicyclonones (DBN), le diazabicycloundécène (DBU), l'imidazol, le 1-méthylimidasol, le 1,2-diméthyilimidazol, le tétrabutylate de titane, le tétraisopropylate de titane, l'oxyde de dibutylétain, le dilaurate de dibutylétain, le dioctoate d'étain ou l'acétylacétonate de zirconium.

10. Procédé selon l'une quelconque des revendications 1 à 9, **caractérisé en ce que** le polycarbonate hautement fonctionnel, hautement ou hyperramifié, obtenu est mis en réaction lors d'une étape supplémentaire (étape c) avec un réactif de fonctionnalisation approprié, qui peut réagir avec les groupes OH et/ou carbonate ou chlorure de carbamoyle du polycarbonate.

11. Procédé selon l'une quelconque des revendications 1 à 10, **caractérisé en ce que** le Polycarbonate hautement fonctionnel, hautement ou hyperramifié, est modifié en réalisant l'étape b) en présence de composés supplémentaires qui comportent, outre des groupes OH, des groupes carbonate ou chlorure de carbamoyle, également des groupes fonctionnels ou des éléments fonctionnels supplémentaire.

12. Polycarbonates hautement fonctionnels, hautement ou hyperramifiés, comportant au moins 3 groupes fonctionnels, présentant un degré de ramification de 10 à 99,9%, qui peuvent être obtenus par un procédé selon l'une quelconque des revendications 1 à 11.

13. Polycarbonates hautement fonctionnels, hautement ou hyperramifiés selon la revendication 12, **caractérisés en ce que** le degré de ramification est de 20 à 95% et **en ce qu'**ils comportent au moins 10 groupes fonctionnels.

14. Utilisation de polycarbonates hautement fonctionnels, hautement ou hyperramifiés, selon la revendication 12 ou 13 en tant qu'agents adhésifs, agents thixotropes et en tant qu'éléments constitutifs pour la fabrication de polymère de polyaddition ou de polycondensation.

15. Utilisation de polycarbonate hautement fonctionnels, hautement ou hyperramifiés, selon la revendication 12 ou 13 pour la fabrication de peintures, de revêtements, d'adhésifs, d'agents d'étanchéité, d'élastomères moulés ou de mousses.

16. Utilisation de Polycarbonates hautement fonctionnels, hautement ou hyperramifiés, selon la revendication 12 ou 13 en tant que liants pour la fabrication d'encres d'impression ou de vernis d'impression.

17. Utilisation selon la revendication 16, **caractérisée en ce** les encres d'impression sont des encres d'impression pour emballages.

18. Utilisation de polycarbonates hautement fonctionnels, hautement ou hyperramifiés, selon la revendication 12 ou 13 pour la fabrication de stratifiés à base de deux films polymères et/ou métalliques ou plus, un film étant imprimé avec une ou plusieurs couches d'une encre d'impression qui contient lesdits polycarbonates en tant que liants et un second film étant laminé sur la couche imprimée.
